# EUROPÄISCHE PATENTANMELDUNG

(11) **EP 2 487 885 A1**
(43) Veröffentlichungstag der Anmeldung: **15.08.2012**
(21) Anmeldenummer: 12154985.1
(22) Anmeldetag: 10.02.2012
(51) Int. Cl.: H04M 1/725, G06F 17/30, G06Q 10/10

(54) **Verfahren zur Speicherung von Daten**

(30) Priorität: 10.02.2011 DE 102011010957
(71) Anmelder: Deutsche Telekom AG, 53113 Bonn (DE)
(72) Erfinder: Steinkuhle, Axel, 50733 Köln (DE)
(74) Vertreter: Schrooten, Rolf

(57) **Zusammenfassung**

Die Erfindung betrifft ein Verfahren zur Speicherung von Daten (4a) zu Anwendungen (3a), die auf einem zur Datenübertragung geeigneten Endgerät ausführbar sind, wobei das Verfahren zumindest die folgenden Schritte umfasst:
- vorab auszuführende Auswahl von mindestens zwei ausführbaren Anwendungen (3a), zu denen Daten (4a) speicherbar sind,
- vorab auszuführende Zuordnung eines Zeitintervalls (2) zu jeder ausgewählten Anwendung (3a), innerhalb dessen zu speichernde Daten (4a) zu der jeweiligen Anwendung (3a) erfasst werden,
- Eingabe eines Speicherbefehls in das Endgerät, welcher die Speicherung von verfügbaren Daten (4a) zu allen ausgewählten Anwendungen (3a) aus dem jeweils zugeordneten Zeitintervall (2) in einer Speichereinrichtung auslöst.

## Beschreibung

Die vorliegende Erfindung betrifft ein Verfahren zur Speicherung von Daten, die im Zusammenhang mit Anwendungen stehen, welche auf einem Datenübertragungs-Endgerät ausführbar sind.

Anwendungen können dabei auf dem Endgerät ausführbare Programme, beispielsweise Mail-Programme oder Internetanwendungen, sowie mit dem Endgerät ausführbare Funktionen wie beispielsweise die Verwendung als Foto- oder Videokamera oder als Kommunikationsvorrichtung, etwa als Telefon sein. Daten, die mit diesen Anwendungen in Zusammenhang stehen, können insbesondere Ereignisse oder Informationen sein, die bei der Ausführung einer Anwendung anfallen. Sie können vom Benutzer des Endgerätes selber erzeugt (z.B. versendete Nachrichten oder aufgebaute Verbindungen) oder von außen auf das Endgerät übertragen werden (z.B. eingehende Nachrichten oder neue Eintragungen oder Veröffentlichungen auf einer Internetseite). Das Verfahren kann vorzugsweise angewendet werden auf mobilen Endgeräten für die Datenübertragung über eine drahtlose Übertragungsstrecke, insbesondere auf internetfähigen Mobiltelefonen.

Allgemein bekannt sind Endgeräte, die mit einem Speicher versehen sind, in dem Daten zu den mit dem Endgerät ausgeführten Verbindungen automatisch protokolliert werden. So kann der Benutzer zu einem späteren Zeitpunkt einen schnellen Überblick beispielsweise darüber erhalten, mit welchen Teilnehmern er zuletzt telefoniert hat oder welche Nachrichten (sms, mms, e-mail) er von welchen Kontakten erhalten oder an welche Kontakte versandt hat.

So ist aus der DE 100 62 067 A1 ein Telefon bekannt, bei dem eine von einem Anrufer übertragene Rufnummer im nachhinein gespeichert und dabei ggf. auch einer bestimmten Gruppe von Kontakten zugeordnet werden kann. Dazu werden vom Telefon standardmäßig die Telefonnummern zu geführten Telefongesprächen gespeichert und dem Benutzer auf Wunsch zur nachträglichen Selektion und Weiterverarbeitung angeboten. Andere Daten können nicht ermittelt und gespeichert werden.

Aus der DE 7 266 768 B2 ist die Kombination eines Mobiltelefons mit einem Diktiergerät bekannt. Insofern können mit diesem Mobiltelefon nach Betätigung einer speziellen Taste zur Aktivierung des Diktiermodus Audiodaten aufgenommen, gespeichert und zu einem späteren Zeitpunkt wiedergegeben werden.

Ferner ist aus der EP 2 028 775 A2 ein Verfahren und ein System zur Markierung eines von einem Mobiltelefon empfangenen Analogsignals, beispielsweise eines von einem Radiosender empfangenen Musikstücks bekannt. Durch Betätigung einer speziellen Markierungstaste kann die aktuell eingestellte Empfangsfrequenz in dem Mobiltelefon abgespeichert werden. Zusätzlich kann auch die aktuelle Zeit sowie der aktuelle Aufenthaltsort abgespeichert werden. Aus diesen abgespeicherten Daten lässt sich das so markierte Musikstück zu einem späteren Zeitpunkt eindeutig wieder rekapitulieren.

Darüber hinaus sind digitale Kameras allgemein bekannt, die zusammen mit den Fotos automatisch auch den Zeitpunkt sowie teilweise auch den Ort der Aufnahme abspeichern.

Aufgabe der vorliegenden Erfindung ist es, ein Verfahren der eingangs genannten Art zu schaffen, mit dem der Nutzer eines Endgerätes auf einfache Weise Informationen zu ausgewählten Bereichen für einen späteren Abruf festhalten kann.

Diese Aufgabe wird erfindungsgemäß durch ein Verfahren nach Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass das Verfahren zumindest die folgenden drei Verfahrensschritte umfasst:
1.) Es werden vorab zunächst mindestens zwei mit dem Endgerät ausführbare Anwendungen ausgewählt und aktiviert, zu denen Daten gespeichert werden sollen,
2.) zu jeder ausgewählten bzw. aktivierten Anwendung wird vorab ein Zeitintervall festgelegt, innerhalb dessen zu speichernde Daten zu der jeweiligen Anwendung erfasst werden sollen, und
3.) mit der anschließend beliebig oft ausführbaren Eingabe eines Speicherbefehls in das Endgerät wird mit jeder Eingabe des Speicherbefehls jeweils die Speicherung von Daten ausgelöst, die zu allen ausgewählten Anwendungen innerhalb des jeweils zugeordneten Zeitintervalls verfügbar sind.

Die so ausgelöste Speicherung der Daten erfolgt in einem gesonderten Speicherbereich und zusätzlich zu den standardmäßig ablaufenden Speichervorgängen zu den auf dem Endgerät laufenden Anwendungen.

Der Grundgedanke der Erfindung liegt also darin, dass im Unterschied zu bisher bekannten Geräten nicht nur automatisch Daten zu den mit dem Endgerät ausgeführten Verbindungen protokolliert werden, sondern dass der Benutzer unabhängig von ausgeführten Verbindungen ganz gezielt selber auswählen kann, zu welchen Zeitpunkten er bestimmte Daten zu den von ihm gewünschten und dafür vorab aktivierten Anwendungen festhalten möchte.

Wesentlich ist dabei auch, dass mit der Betätigung nur eines einzigen Speicherbefehls gleichzeitig Daten zu mehreren Anwendungen gespeichert werden, was das Festhalten einer Mehrzahl von Informationen deutlich vereinfacht. Diese gegebenenfalls noch durch Filter weitere selektierbaren Daten werden aber stets nur dann gespeichert, wenn der Benutzer die Speicherung aktiv initiiert. Ohne bewusste Auslösung durch den Benutzer wird diese Art der parallelen Speicherung mehrerer Daten nicht ausgeführt.

Von grundlegenden Bedeutung ist ferner, dass der Anwender des Verfahrens vorab nicht nur die Anwendungen bzw. Funktionen auswählen kann, zu denen er im Bedarfsfall Daten festhalten möchte (= erster Verfahrensschritt), sondern dass er zusätzlich zu jeder einzelnen ausgewählten Anwendung auch noch mittels individuell festlegbarer Zeitintervalle bestimmen kann, wie lange bzw. über welchen Zeitraum hinweg Daten zu den jeweiligen Anwendungen erfasst werden sollen (= zweiter Verfahrensschritt), die dann bei jeder Betätigung des Speicherbefehls gesondert gespeichert werden (= dritter Verfahrensschritt). Während der dritte Verfahrensschritt beliebig oft ausgeführt wird, reicht es aus, den ersten und den zweiten Verfahrensschritt jeweils nur einmal vorab auszuführen. Für gegebenenfalls gewünschte Abänderungen der vorab zu treffenden Einstellungen hinsichtlich Auswahl der interessierenden Anwendungen und/oder hinsichtlich der zugehörigen Zeitintervalle kann aber auch der erste und/oder der zweite Verfahrensschritt beliebig oft wiederholt werden.

Ein wesentlicher Vorteil des erfindungsgemäßen Verfahrens besteht darin, dass der Benutzer mit den gespeicherten Daten bestimmte Parameter, Ereignisse oder Informationen zu einem Zeitpunkt festhalten kann, der für ihn einen besonders wertvollen Moment darstellt. So kann er beispielsweise Daten zu Augenblicken aufbewahren, an denen er sich besonders gut fühlt oder besonders glücklich ist, oder aber auch zu Momenten an denen er Trauer empfindet. Zu späteren Zeitpunkten kann er sich durch Wiedergabe der von ihm gezielt abgespeicherten Informationen wieder an die näheren Umstände dieser wertvollen bzw. aufbewahrungswürdigen Momente erinnern lassen.

Ein besonderer Vorteil des Verfahrens liegt auch darin, dass sich das Zeitintervall für die ausgewählten Anwendungen ausgehend von dem Zeitpunkt der Eingabe des Speicherbefehls in die Zukunft erstrecken kann. So kann der Nutzer zu den von ihm ausgewählten Anwendungen bzw. Funktionen jeweils festlegen, wie lange nach einem bestimmten für ihn wertvollen Moment er Ereignisse oder Informationen zu den jeweiligen Anwendungen erfassen und festhalten möchte.

Zusätzlich oder alternativ können sich die Zeitintervalle für ausgewählte Anwendungen ausgehend von dem Zeitpunkt der Eingabe des Speicherbefehls auch in die Vergangenheit erstrecken. Dadurch kann der Nutzer zu den ausgewählten Anwendungen auch festlegen, wie lange die festzuhaltenden Daten vor einem wertvollen Moment zurückliegen sollen.

Die jeweils einmalig vorab beliebig festzulegenden Zeitintervalle können sich so beispielsweise von wenigen Sekunden oder Minuten bis zu mehreren Stunden oder auch Tagen in die Vergangenheit und/oder in die Zukunft erstrecken.

Vorteilhafterweise kann dabei die Dauer des Zeitintervalls für jede ausgewählte Anwendung separat und unabhängig von anderen ausgewählten Anwendungen eingestellt werden. Im Extremfall kann die Intervalllänge für eine ausgewählte Anwendung auch auf Null gesetzt werden, so dass nur eine Momentaufnahme gespeichert wird.

Besonders vorteilhaft ist es, wenn Daten zu einer ausgewählten Anwendung gespeichert werden, die sich über das entsprechende Zeitintervall hinweg ändern oder neu erzeugt werden. Beispielsweise können so Daten zu innerhalb des Zeitintervalls geführten Telefongesprächen oder zu innerhalb des Zeitintervalls erhaltenen oder gesendeten E-Mails festgehalten werden.

Gemäß einer besonders bevorzugten Ausführungsform der Erfindung ist vorgesehen, dass zusätzlich zu den innerhalb der jeweiligen Zeitintervalle zu einer ausgewählten Anwendung erfassten Daten auch noch Zusatzdaten gespeichert werden, welche zwar außerhalb des zugeordneten Zeitintervalls erfasst, aber mit innerhalb des zugeordneten Zeitintervalls ermittelten Daten verknüpft werden. Diese logisch mit den Daten verknüpften Zusatzdaten werden also entweder erst nach Ablauf des zugeordneten Zeitintervalls erzeugt, oder sie sind bereits vor Beginn des zugeordneten Zeitintervalls erzeugt worden. Wenn beispielsweise in Facebook als ausgewählter Anwendung ein Foto innerhalb des zugeordneten Zeitintervalls gepostet wird, so gehört dieses Foto zu den erfassten und gespeicherten Daten. Werden dann auch noch nach Ablauf des zugeordneten Zeitintervalls Kommentare zu diesem Foto gepostet, so werden diese Kommentare ebenfalls noch erfasst und gespeichert, da sie logisch mit dem innerhalb des Zeitintervalls erfassten Fotos verknüpft sind.

Besonders vorteilhaft ist es ferner, wenn die Daten zu den mindestens zwei ausgewählten Anwendungen zusammen mit dem aktuellen Datum und der Uhrzeit der Eingabe des Speicherbefehls sowie vorzugsweise auch mit dem aktuellen Aufenthaltsort des Endgerätes gespeichert werden. Vorteilhafterweise können diese zeitlichen und örtlichen Parameter mittels Uhr und GPS-Signalempfänger vom Endgerät selber detektiert werden.

Es können Daten zu ausgewählten Anwendungen gespeichert werden, die innerhalb des Endgerätes vorliegen, etwa Daten zu besuchten Webseiten oder zu erhaltenen Mails oder zu einem bestimmten Betriebszustand des Endgerätes, etwa zu wiedergegebenen Audio- oder Videodateien. Vorzugsweise können aber auch Daten gespeichert werden, die dem Endgerät über eine drahtlose und/oder drahtgebundene Übertragungsstrecke von außen zugeführt werden. So kann das Endgerät bei Auslösung des Speicherbefehls beispielsweise Daten zum aktuellen Wetter speichern, die es über das Internet erhält.

Besonders vorteilhaft ist es dabei, wenn für den Fall einer vorübergehenden Unterbrechung der drahtlosen bzw. drahtgebundenen Übertragungsstrecke vorgesehen ist, dass zunächst nur der Zeitpunkt der Eingabe des Speicherbefehls gespeichert wird, und die Daten zu den ausgewählten Anwendungen aus dem jeweils zugeordneten Zeitintervall dem Endgerät erst dann zugeführt und gespeichert werden, wenn die Übertragungsstrecke wieder hergestellt ist. So können webbasierte Daten nach Auslösung des Speicherbefehls zu einem späteren Zeitpunkt erfasst und gespeichert werden, wenn das Endgerät wieder online ist.

Günstig ist es ferner, wenn die zu speichernden Daten nicht nur über Referenzen erhoben werden, sondern wenn jeweils Kopien der in den jeweiligen Zeitintervallen erfassten Daten vorteilhafterweise in einem komprimierten Format gespeichert werden. Diese Kopien stehen dann später als Offline-Kopie zur Verfügung, also auch dann wenn der entsprechende Dienst gerade nicht online erreichbar ist oder wenn die Daten inzwischen bereits wieder verändert worden sind.

Gemäß einer weiteren besonders bevorzugten Ausführungsform der Erfindung ist vorgesehen, dass die aus den jeweiligen Zeitintervallen erfassten Daten von dem Endgerät über eine drahtlose und/oder drahtgebundene Übertragungsstrecke an eine externe Speichereinrichtung übertagen und dort gespeichert werden. Vorzugsweise können die zu den ausgewählten Anwendungen erfassten Daten auf einem Server bzw. im Internet ("in der Cloud") gespeichert werden. Von dort aus können die gespeicherten Daten leicht auch an weitere Endgeräte übertragen und darauf wiedergegeben werden. Alternativ kann die verwendete Speichereinrichtung sich aber auch in dem Endgerät befinden.

Besonders vorteilhaft ist es, wenn die zu den ausgewählten Anwendungen erfassten und gespeicherten Daten sowie auch die ggf. zusätzlich gespeicherten Zusatzdaten mit mindestens einer bestimmten, ausgewählten oder nicht ausgewählten Anwendung derart verknüpfbar sind, dass die Daten in dieser bestimmten Anwendung ausgewählt und wiedergegeben werden können. So können die Daten also in bestimmte Anwendungen eingebunden bzw. exportiert werden.

Gegenstand der vorliegenden Erfindung ist auch eine Vorrichtung, die zur Ausführung des Verfahrens der vorangehend beschriebenen Art geeignet ist. Eine derartige Vorrichtung kann vorzugsweise eine tragbare Kommunikationsvorrichtung, insbesondere ein Mobiltelefon sein.

Ein stationäres oder mobiles Endgerät für die Datenübertragung über eine drahtgebundene und/oder drahtlose Übertragungsstrecke umfasst dabei vorteilhafterweise ein Bedienelement, durch dessen Betätigung Daten zu mindestens zwei von dem Endgerät ausführbaren Anwendungen gespeichert werden, wobei die zu speichernden Daten innerhalb von zu den Anwendungen jeweils separat festlegbaren Zeitintervallen erfasst werden.

Die Daten, die bei der Betätigung des Bedienelements innerhalb der den Anwendungen jeweils zugeordneten Zeitintervallen erfasst werden, können aktuelle Betriebszustände des Endgerätes betreffen und/oder sie können Betriebszustände des Endgerätes betreffen, die innerhalb einer vorgegebenen oder vorgebbaren Maximaldauer zurückliegen oder innerhalb einer vorgegebenen oder vorgebbaren Maximaldauer nach der Betätigung des ersten Bedienelements ermittelbar sind.

Besonders vorteilhaft ist es, wenn die Daten zu Parametern und/oder Betriebszuständen und/oder Anwendungen des Endgerätes zusammen mit dem aktuellen Datum und insbesondere auch zusammen mit der aktuellen Uhrzeit abgespeichert werden. Auf diese Weise erhalten die vom Benutzer zum Abspeichern ausgewählten Daten quasi einen Datumsstempel bzw. einen Zeitstempel, so dass sie später zusammen mit dieser Stempel-Information wiedergegeben oder auch in einem elektronischen Kalender abgelegt und in Abhängigkeit von Datum und/oder Zeit wieder abgerufen werden können.

Auch können bei der Betätigung des Bedienelements aktuelle Umgebungsgeräusche mit einem im Endgerät vorhandenen Mikrofon aufgenommen und als Audiodaten abgespeichert werden.

Besonders vorteilhaft ist es, wenn die gespeicherten Daten auf Wunsch des Benutzers an mindestens ein weiteres Endgerät oder an einen Server übertragen werden können. Auf diese Weise kann der Benutzer beispielsweise nähere Informationen zu von ihm als besonders positiv empfundenen Umständen auch anderen Teilnehmern zukommen lassen.

Die Erfindung betrifft ferner auch ein computerlesbares Medium mit Computerprogrammcode zur Steuerung einer Vorrichtung der vorgenannten Art zur Ausführung des Verfahrens der weiter oben beschriebenen Art.

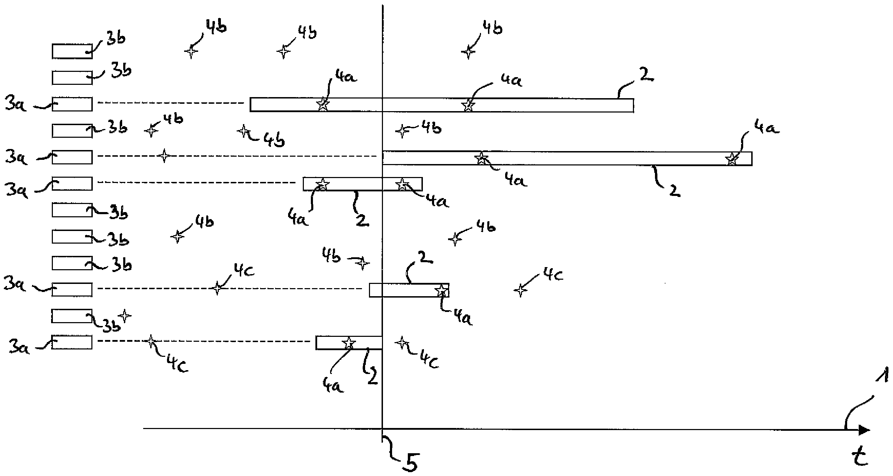

Weitere Vorteile und Merkmale der Erfindung ergeben sich aus der nachfolgenden Beschreibung zu dem in der Zeichnung dargestellten Ausführungsbeispiel.

Die Zeichnung zeigt eine schematische Darstellung zum Ablauf des erfindungsgemäßen Verfahrens. Dargestellt sind dabei über einer Zeitachse 1 verschiedene Zeitintervalle 2 zu insgesamt fünf Anwendungen 3a, die ein Benutzer aus einer Vielzahl von Anwendungen, welche auf einem Endgerät ausführbar sind, vorab ausgewählt und aktiviert hat. Die anderen Anwendungen 3b wurden nicht ausgewählt. Die Anwendungen 3a und 3b werden auch als Kanäle bezeichnet, die fortlaufend Daten 4a, 4b, 4c erzeugen oder empfangen.

Beispiele für die Anwendungen oder Kanäle, aus denen der Benutzer bei einem internetfähigen Mobiltelefon (Smartphone) einzelne für ihn interessante Anwendungen auswählen kann, sind:
Aus dem Bereich Mobiltelefon: Fotos, Videos, Musik-Player, Anrufe, GPS, SMS, EMAIL, Mikrofon, Kamera, Kalender oder Adressbuch.
Aus dem Bereich Internet: Wetter, Google Maps, Google Fotos, Flickr, Streatview, Twitter, Facebook oder Google +.

Die genaue Lage der Zeitintervalle 2 bestimmt sich nach dem Auslösezeitpunkt 5, an dem der Benutzer im dritten Verfahrensschritt den Befehl zur Speicherung der Daten auslöst. Es werden dabei nur die durch fünfarmige Sterne dargestellten Daten 4a gespeichert, die zu den ausgewählten Anwendungen 3a und innerhalb der vom Benutzer zuvor jeweils zugeordneten Zeitintervalle 2 anfallen.

Die durch vierarmige Sterne dargestellten Daten 4b, die zu einem beliebigen Zeitpunkt zu nicht ausgewählten Anwendungen 3b anfallen, werden nicht gespeichert. Ebenso werden die durch vierarmige Sterne dargestellten Daten 4c, die zu den ausgewählten Anwendungen 3a außerhalb der jeweiligen Zeitintervalle 2 anfallen, nicht gespeichert.

Die Daten 4a werden jeweils zusammen mit dem aktuellen Aufenthaltsort des Endgerätes und mit dem aktuellen Zeitpunkt 5 der Auslösung des Speicherbefehls gespeichert. Sie können dann später beispielsweise in einer tabellarischen Anordnung angezeigt werden, die nach Ort oder Zeit sortiert werden kann.

Auch können die gespeicherten Daten 4a in bestimmte Anwendungen, etwa in Facebook exportiert oder dort in Form von Links eingebunden werden. Ebenso können die gespeicherten Daten 4a an weitere Endgeräte übertragen werden.

Wenn die vorab getroffene Auswahl der ausgewählten Anwendungen 3a und/oder die hierzu jeweils vorab festgelegte Länge oder Lage der Zeitintervalle 2 abgeändert werden soll, können der erste Verfahrensschritt und/oder der zweite Verfahrensschritt erneut ausgeführt werden, und zwar wiederum vorab bezogen auf die danach beliebig oft erfolgenden Auslösungen des Speicherbefehls im dritten Verfahrensschritt.

## Patentansprüche

1. Verfahren zur Speicherung von Daten (4a) zu Anwendungen (3a), die auf einem zur Datenübertragung geeigneten Endgerät ausführbar sind, umfassend die folgenden Schritte:
- vorab auszuführende Auswahl von mindestens zwei ausführbaren Anwendungen (3a), zu denen Daten (4a) speicherbar sind,
- vorab auszuführende Zuordnung eines Zeitintervalls (2) zu jeder ausgewählten Anwendung (3a), innerhalb dessen zu speichernde Daten (4a) zu der jeweiligen Anwendung (3a) erfasst werden,
- Eingabe eines Speicherbefehls in das Endgerät, welcher die Speicherung von verfügbaren Daten (4a) zu allen ausgewählten Anwendungen (3a) aus dem jeweils zugeordneten Zeitintervall (2) in einer Speichereinrichtung auslöst.

2. Verfahren nach Anspruch 1, **dadurch gekennzeichnet, dass** das Zeitintervall (2) für eine ausgewählte Anwendung (3a) sich ausgehend von dem Zeitpunkt (5) der Eingabe des Speicherbefehls in die Zukunft erstreckt.

3. Verfahren nach Anspruch 1 oder 2, **dadurch gekennzeichnet, dass** das Zeitintervall (2) für eine ausgewählte Anwendung (3a) sich ausgehend von dem Zeitpunkt (5) der Eingabe des Speicherbefehls in die Vergangenheit erstreckt.

4. Verfahren nach einem der vorherigen Ansprüche, **dadurch gekennzeichnet, dass** für jede ausgewählte Anwendung (3a) die Dauer des Zeitintervalls (2) separat einstellbar ist.

5. Verfahren nach einem der vorherigen Ansprüche, **dadurch gekennzeichnet, dass** Daten (4a) gespeichert werden, die sich über das Zeitintervall (2) hinweg ändern oder neu erzeugt werden.

6. Verfahren nach einem der vorherigen Ansprüche, **dadurch gekennzeichnet, dass** Zusatzdaten zu einer ausgewählten Anwendung (3a) gespeichert werden, die außerhalb des zugeordneten Zeitintervalls (2) erzeugt und mit Daten (4a) verknüpft werden, welche innerhalb des zugeordneten Zeitintervalls (2) erfasst und gespeichert werden.

7. Verfahren nach einem der vorherigen Ansprüche, **dadurch gekennzeichnet, dass** die Daten (4a) zu den ausgewählten Anwendungen (3a) zusammen mit dem Zeitpunkt (5) der Eingabe des Speicherbefehls und vorzugsweise mit dem Aufenthaltsort des Endgerätes gespeichert werden.

8. Verfahren nach einem der vorherigen Ansprüche, **dadurch gekennzeichnet, dass** Daten (4a) gespeichert werden, die dem Endgerät über eine drahtlose und/oder drahtgebundene Übertragungsstrecke zugeführt werden.

9. Verfahren nach Anspruch 8, **dadurch gekennzeichnet, dass** zunächst nur der Zeitpunkt (5) der Eingabe des Speicherbefehls gespeichert wird, und dass die Daten (4a) zu den ausgewählten Anwendungen (3a) aus dem jeweils zugeordneten Zeitintervall (2) dem Endgerät erst zu einem späteren Zeitpunkt zugeführt und dann gespeichert werden.

10. Verfahren nach einem der vorherigen Ansprüche, **dadurch gekennzeichnet, dass** eine Kopie der zu den ausgewählten Anwendungen (3a) erfassten Daten (4a) gespeichert wird.

11. Verfahren nach einem der vorherigen Ansprüche, **dadurch gekennzeichnet, dass** die zu den ausgewählten Anwendungen (3a) erfassten Daten (4a) von dem Endgerät über eine drahtlose und/oder drahtgebundene Übertragungsstrecke an eine externe Speichereinrichtung übertagen und dort gespeichert werden.

12. Verfahren nach einem der vorherigen Ansprüche, **dadurch gekennzeichnet, dass** die zu den ausgewählten Anwendungen (3a) erfassten und gespeicherten Daten (4a) mit mindestens einer Anwendung derart verknüpft werden, dass sie darin auswählbar und wiedergebbar sind.

13. Vorrichtung zur Durchführung des Verfahrens nach einem der Ansprüche 1 bis 12, wobei die Vorrichtung vorzugsweise eine tragbare Kommunikationsvorrichtung, insbesondere ein Mobiltelefon ist.

14. Stationäres oder mobiles Endgerät für die Datenübertragung über eine drahtgebundene und/oder drahtlose Übertragungsstrecke, insbesondere Mobiltelefon zur Telekommunikation über ein Kommunikationsnetz,
**dadurch gekennzeichnet,**
**dass** ein Bedienelement vorgesehen ist, durch dessen Betätigung Daten (4a) zu mindestens zwei von dem Endgerät ausführbaren Anwendungen (3a) speicherbar sind, wobei die zu speichernden Daten innerhalb von zu den Anwendungen (3a) jeweils separat festlegbaren Zeitintervallen (2) erfassbar sind.

15. Computerlesbares Medium mit Computerprogrammcode zur Steuerung einer Vorrichtung nach Anspruch 13 oder 14 zur Ausführung des Verfahrens nach einem der Ansprüche 1 bis 12.
